# EUROPEAN PATENT APPLICATION

(11) **EP 0 568 979 A1**
(43) Date of publication of application: **10.11.1993**
(21) Application number: 93107220.1
(22) Date of filing: 04.05.1993
(51) Int. Cl.: H04M 1/27, H04M 1/65

(54) **Speech recognition adapter for telephone system**

(30) Priority: 08.05.1992 JP 143429/92
(71) Applicant: SONY CORPORATION, Tokyo 141 (JP)
(72) Inventor: Kato, Yasuhiko, Shinagawa-ku, Tokyo (JP); Watari, Masao, Shinagawa-ku, Tokyo (JP); Tanaka, Miyuki, Shinagawa-ku, Tokyo (JP)
(74) Representative: Melzer, Wolfgang, Dipl.-Ing.

(57) **Abstract**

When the handset of a telephone set (10) is lifted off-hook and the name of a person to be called is uttered, the voice sound indicating the name is supplied from the telephone set (10) to a speech recognition unit (4). The speech recognition unit (4) refers to standard patterns stored in a built-in standard pattern memory, recognizes the voice sound indicating the name, and outputs a recognized result indicating the name to a controller (6). The controller (6) reads, from a built-in memory, dial numbers representing a telephone number associated with the name of the person outputted from the speech recognition unit (4), and supplies the dial numbers to a tone signal generator (2). The tone signal generator (2) transmits, to an exchange office, a pushbutton signal or a dial pulse signal corresponding to the dial numbers representing the telephone number supplied from the controller (6).

## Description

### BACKGROUND OF THE INVENTION

### Field of the Invention:

The present invention relates to a speech recognition adapter for use with a multifunction telephone set such as a telephone set with a telephone answering function.

### Description of the Related Art:

Conventional telephone sets with a telephone answering function record, on a tape, for example, messages from incoming calls that arrive while the called person is out. The called person can call his own telephone set from another telephone set, such as a telephone set outside his home, and press pushbuttons of the other telephone set to transmit a pushbutton signal corresponding to a pre-registered password number and then a predetermined pushbutton signal to reproduce any incoming call messages that have been recorded on the tape while he has been absent.

The telephone sets with a telephone answering function can be controlled to perform various functions, e.g., reproduce and erase recorded messages, from other telephone sets.

The conventional telephone sets with a telephone answering function are, however, not simple to use because the pushbuttons of the other telephone set have to be pressed in different combinations to perform the respective various functions, e.g., to reproduce and erase recorded messages, and such different pushbutton combinations must be memorized.

To place a telephone call from a telephone set with a telephone answering function, pushbuttons thereof are pressed to dial the telephone number of the person to whom the telephone call is to be made. Since different telephone numbers are used to call different persons, those different telephone numbers have also to be memorized.

There is a telephone set having a memory, for example, which stores the uttered names of persons and the telephone numbers of the persons as related to their names. When the name of a person to be called is uttered, the telephone set transmits a pushbutton signal corresponding to the stored telephone number that is associated with the uttered name. However, this telephone set is expensive and, for use, must replace an existing telephone set, which is wasted.

### SUMMARY OF THE INVENTION

It is therefore an object of the present invention to provide a speech recognition adapter for use in a telephone system, which is of low cost and allows a telephone set to be operated with ease.

According to the present invention, there is provided a speech recognition adapter for use in a telephone system having a telephone set and an exchange office, adapted to be connected between a modular jack coupled to the telephone set and a modular jack coupled to the exchange office, the speech recognition adapter comprising speech recognizing means for recognizing a voice sound, storage control means for storing a voice sound recognized by the speech recognizing means in association with a dial number transmitted from the telephone set, and transmitting means for transmitting the dial number in response to the voice sound.

The speech recognizing means may recognize a voice sound representing the name of a person to be called and transmitted from the telephone set, and the transmitting means may be responsive to the voice sound transmitted from the telephone set and recognized by the speech recognizing means for transmitting a dial number associated with the voice sound and stored in the storage control means.

The speech recognizing means may alternatively recognize a voice sound representing a function of the telephone set and transmitted from the exchange office, and the transmitting means may be responsive to the voice sound transmitted from the exchange office and recognized by the speech recognizing means for transmitting a dial number associated with the voice sound and stored in the storage control means.

The speech recognition adapter is connected between the modular jack coupled to the telephone set and the modular jack coupled to the exchange office. The speech recognition adapter recognizes a voice sound indicative of the name of a person to be called or a function of the telephone set, and stores the voice sound in association with a dial number transmitted from the telephone set. Then, in response to a voice sound representing the name of a person to be called or a function of the telephone set, the speech recognition adapter transmits a dial number. Simply by being connected to the existing telephone set, the speech recognition adapter can dial a telephone number or operate the telephone set under the control of a voice sound. The speech recognition adapter can thus operate the telephone set with ease at low cost.

In one mode, the speech recognizing means recognizes a voice sound from the telephone set, which represents the name of a person to be called, and the transmitting means transmits dial numbers stored in the storage control means to the exchange office in response to the voice sound representing the name of a person to be called from the telephone set and recognized by the speech recognizing means. In this mode, the telephone set can be operated with ease because the user can make a telephone call simply by uttering the name of the person to be called.

In another mode, the speech recognizing means recognizes a voice sound from the exchange office, which represents a function of the telephone set, and the transmitting means transmits a dial number stored in the storage control means to the telephone set in response to the voice sound representing the function of the telephone set from the exchange office and recognized by the speech recognizing means. In this mode, the user is not required to memorize how to operate the telephone set, and the telephone set can be operated with ease because the user can control the telephone set simply by uttering the function of the telephone set.

The above and other objects, features, and advantages of the present invention will become apparent from the following description when taken in conjunction with the accompanying drawings which illustrate a preferred embodiment of the present invention by way of example.

### BRIEF DESCRIPTION OF THE DRAWINGS

FIG. 1 is a block diagram of a speech recognition adapter according to the present invention which is directly connected to modular jacks on telephone set and exchange office sides;
FIG. 2 is a flowchart of an operation sequence of the speech recognition adapter shown in FIG. 1 when it operates in a name registration mode;
FIG. 3 is a flowchart of an operation sequence of the speech recognition adapter shown in FIG. 1 when it operates in a command registration mode;
FIG. 4 is a flowchart of an operation sequence of the speech recognition adapter shown in FIG. 1 when it operates in a speech registration mode; and
FIG. 5 is a block diagram of the speech recognition adapter that is connected to modular jacks on telephone set and exchange office sides through a three-way modular jack.

### DETAILED DESCRIPTION OF THE PREFERRED EMBODIMENT

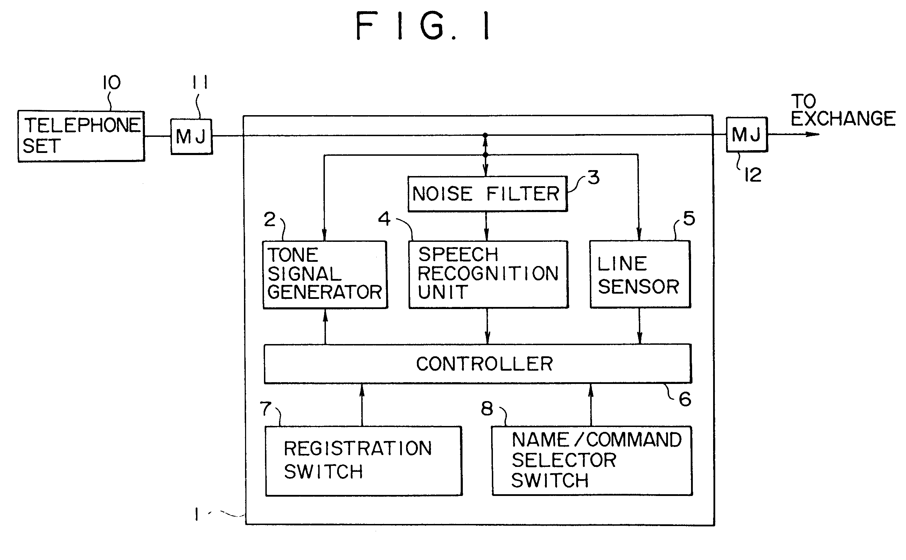

As shown in FIG. 1, a speech recognition adapter, generally designated by the reference numeral 1, according to the present invention is connected between a telephone set 10 and an exchange office. The telephone set 10 has a telephone answering function, and is of a known nature capable of performing various functions, e.g., reproducing and erasing messages that have been recorded on a builtin tape (not shown) while the user is away, under the control of dial numbers transmitted from another telephone set (not shown).

The speech recognition adapter 1 comprises a tone signal generator 2, a noise filter 3, a speech recognition unit 4, a line sensor 5, a controller 6, a registration switch 7, and a name/command selector switch 8. The speech recognition adapter 1 is connected to a modular jack 11 which is coupled to the telephone set 10 and a modular jack 12 which is coupled to the exchange office. The tone signal generator 2 is controlled by the controller 6 to transmit a pushbutton signal or a dial pulse signal corresponding to a dial number to the telephone set 10 or the exchange office.

The noise filter 3 serves to remove noise on the telephone transmission line and also a dial tone transmitted from the exchange office (switchboard, not shown) when the handset (not shown) of the telephone set 10 is off-hook. The speech recognition unit 4 recognizes, through the noise filter 3, a speech signal transmitted from the telephone set 10 or the exchange office, and supplies a recognized result to the controller 6. The line sensor 5 monitors the condition of the telephone transmission line for a change in the line voltage, for example, detects whether the handset of the telephone set 10 is off-hook to make a telephone call from the telephone set 10 or to answer a telephone call from the exchange office, and outputs a recognized result to the controller 6. The line sensor 5 also detects which one of "1", "2", "3", "4", "5", "6", "7", "8", "9", "0", "#", and "*" that corresponds to a dial number that has been transmitted from the telephone set 10 or the exchange office to the telephone transmission line, and outputs a detected result to the controller 6.

When the registration switch 7 is turned on, i.e., when the speech recognition adapter 1 is in a registration mode, the controller 6 associates an uttered voice sound indicative of the name of a person to be called or a function of the telephone set 10, which voice sound has been outputted from the telephone set 10 and recognized by the speech recognition unit 4, with a dial number transmitted by a pressed pushbutton (not shown) of the telephone set 10, and stores the voice sound associated with the dial number in a built-in memory (not shown).

When the registration switch 7 is turned off, i.e., when the speech recognition adapter 1 is in a speech recognition mode, the controller 6 reads, from the built-in memory, a dial number associated with an uttered voice sound indicative of the name of a person to be called or a function of the telephone set 10, which voice sound has been outputted from the telephone set 10 or the exchange office and recognized by the speech recognition unit 4, and applies a control signal to the tone signal generator 2 in order to transmit the dial number to the telephone set 10 or the exchange office.

The registration switch 7 serves as a switch to switch the operation mode of the speech recognition adapter 1 between a registration mode and a speech recognition mode. The name/command selector switch 8 is a switch that is effective when the registration switch 7 is turned on. The name/command selector switch 8 is shifted to select a name mode when a dial number to be stored in the built-in memory of the controller 6 is a telephone number associated with the name of a person to be called. The name/command selector switch 8 is shifted to select a command mode when a dial number to be stored in the built-in memory of the controller 6 is a command associated with a function of the telephone set 10.

Operation of the speech recognition adapter 1 will be described below. It is assumed that the registration switch 7 is turned on and the name/command selector switch 8 is shifted to select the name mode, i.e., the speech recognition adapter 1 is in a name registration mode. When the handset of the telephone set 10 is lifted off-hook and the name of a person to be registered is uttered twice, the line sensor 5 detects the off-hook of the handset, and indicates the off-hook condition to the controller 6. The controller 6 then applies a control signal to the speech recognition unit 4 to register the voice sound (indicating the name of the person) that is supplied from the telephone set 10 (handset of the telephone set 10) through the modular jack 11 and the noise filter 3.

Upon detection of the control signal from the controller 6, the speech recognition unit 4 registers the voice sound (indicating the name of the person) that is supplied from the telephone set 10 (handset of the telephone set 10) through the modular jack 11 and the noise filter 3, as a standard pattern in a built-in standard pattern memory.

The speech recognition unit 4 uses one of the two utterances of the name of the person, which has been uttered twice while the handset of the telephone unit 10 is lifted off-hook, for registration, and the other utterance for confirmation. Specifically, only when the voice sound patterns of the two utterances of the name agree with each other, the speech recognition unit 4 stores either one of the utterances of the name in the built-in standard pattern memory.

Immediately thereafter, when pushbuttons of the telephone set 10 are pressed to input the telephone number of the person whose name has been uttered, and the handset of the telephone set 10 is placed on-hook, the telephone number is supplied through the line sensor 5 to the controller 6. The telephone number is associated with the registered name stored in the built-in standard pattern memory of the speech recognition unit 4, and stored in the built-in memory of the controller 6.

If there are a plurality of persons whose names have to be registered, the above process is repeated.

It is assumed that the registration switch 7 is turned on and the name/command selector switch 8 is shifted to select the command mode, i.e., the speech recognition adapter 1 is in a command (function of the telephone set 10) registration mode. In the command registration mode, a password number is first registered. Specifically, the handset of the telephone set 10 is lifted off-hook and a four-figure dial number, for example, is inputted as a password number by the pushbuttons of the telephone set 10, and then the handset of the telephone set 10 is placed on-hook. The password number is supplied through the line sensor 5 to the controller 6, and stored in the built-in memory of the controller 6.

Then, the handset of the telephone set 10 is lifted off-hook, and a voice sound representing a command for executing a function of the telephone set 10, e.g., a voice sound "PLAYBACK" representing a command to play back messages that have been recorded on the tape while the user is away, is uttered twice. The line sensor 5 detects the on-hook of the handset, and indicates the on-hook condition to the controller 6. The controller 6 then applies a control signal to the speech recognition unit 4 to register the voice sound (indicating the command "PLAYBACK") that is supplied from the telephone set 10 (handset of the telephone set 10) through the modular jack 11 and the noise filter 3.

Upon detection of the control signal from the controller 6, the speech recognition unit 4 registers the voice sound (indicating the command "PLAYBACK") that is supplied from the telephone set 10 (handset of the telephone set 10) through the modular jack 11 and the noise filter 3, as a standard pattern in a built-in standard pattern memory.

As in the name registration mode, the speech recognition unit 4 uses one of the two utterances of the name of the person, which has been uttered twice while the handset of the telephone unit 10 is lifted off-hook, for registration, and the other utterance for confirmation.

Immediately thereafter, when pushbuttons of the telephone set 10 are pressed to input a dial number for performing the function of the telephone set 10 which corresponds to the previously uttered command "PLAYBACK", i.e., a dial number (e.g., "#1") for playing back messages that have been recorded on the tape while the user is away, and the handset of the telephone set 10 is placed on-hook, the dial number is supplied through the line sensor 5 to the controller 6. The dial number is associated with the registered voice sound (command "PLAYBACK") stored in the standard pattern memory of the speech recognition unit 4, and stored in the built-in memory of the controller 6.

If there are a plurality of commands (functions of the telephone set 10) which have to be registered, the above process except the registration of the password number is repeated.

It is assumed that the registration switch 7 is turned off, i.e., the speech recognition adapter 1 is in a speech recognition mode. When the handset of the telephone set 10 is lifted off-hook in order to transmit a signal from the telephone set 10 (i.e., to make a telephone call from the telephone set 10, the line sensor 5 detects the off-hook of the handset of the telephone set 10, and indicates the off-hook condition to the controller 6. The controller 6 then applies a control signal to the speech recognition unit 4 to recognize a voice sound (representing the name of a person to be called) outputted from the telephone set 10. Upon detection of the control signal from the controller 6, the speech recognition unit 4 starts recognizing the voice sound which represents the name of a person to be called.

Immediately thereafter, when pushbuttons of the telephone set 10 are pressed to transmit dial numbers indicative of a telephone number, the line sensor 5 detects the dial numbers and indicates the transmission initiated by the pushbuttons of the telephone set 10 to the controller 6. The controller 6 outputs a control signal to the speech recognition unit 4 to cause the speech recognition unit 4 to stop the speech recognition process. The speech recognition unit 4 now stops the speech recognition process. Specifically, when pushbuttons of the telephone set 10 are pressed to transmit dial numbers indicative of a telephone number, the speech recognition adapter 1 establishes a through connection allowing a signal from the modular jack 11 to be outputted to the modular jack 12 and also allowing a signal from the modular jack 12 to be outputted to the modular jack 11.

If any pushbuttons of the telephone unit 10 are not pressed and the name of a person to be called is uttered, then the voice sound (representing the name of the person) is supplied from the telephone set 10 through the modular jack 11 and the noise filter 3 to the speech recognition unit 4. The speech recognition unit 4 refers to the standard patterns stored in the built-in standard pattern memory, recognizes the voice sound (representing the name of the person), and outputs the recognized result to the controller 6. The controller 6 then reads dial numbers (representing the telephone number) which are associated with the name of the person from the speech recognition unit 4 from the built-in memory, and supplies the dial numbers to the tone signal generator 2. The tone signal generator 2 supplies a pushbutton number or a dial pulse signal corresponding to the dial numbers (representing the telephone number) supplied from the controller 6, through the modular jack 12 to the exchange office.

As described above, the user can make a telephone call to a person simply by uttering the name of the person.

If a call arrives from another telephone set while the telephone set 10 is in a telephone answering mode, a message of the telephone answering mode "I AM OUT NOW. PLEASE LEAVE A MESSAGE." is transmitted from the telephone set 10. If any dial numbers indicating a password number are not immediately thereafter transmitted from the other telephone set, then the speech recognition adapter 1 sets up a through connection, and the telephone set 10 operates normally in the telephone answering mode.

If dial numbers indicating a password number are not transmitted from the other telephone set immediately after the message of the telephone answering mode has been transmitted from the telephone set 10, then the line sensor 5 detects the password number and supplies it to the controller 6. The controller 6 determines whether or not the password number from the line sensor 5 agrees with a password number that has been registered in the built-in memory. If the password number from the line sensor 5 agrees with a password number that has been registered in the built-in memory, then the controller 6 outputs a control signal to the speech recognition unit 4 to recognize a voice sound (representing a command) transmitted from the other telephone set. Upon detection of the control signal from the controller 6, the speech recognition unit 4 starts recognizing the voice sound representing the command.

If pushbuttons of the other telephone set are immediately thereafter pressed to transmit dial numbers indicative of a command, then the dial numbers are detected by the line sensor 5, which indicates the transmission initiated by the pushbuttons of the other telephone set to the controller 6. The controller 6 outputs a control signal to the speech recognition unit 4 to cause the speech recognition unit 4 to stop the speech recognition process. The speech recognition unit 4 now stops the speech recognition process. In the presence of dial numbers indicative of a command transmitted from the other telephone set, therefore, the speech recognition adapter 1 establishes a through connection.

If any pushbuttons of the other telephone set are not pressed and a command "PLAYBACK", for example, is uttered at the other telephone set, then the voice sound indicating the command "PLAYBACK" is supplied from the other telephone set through the modular jack 12 and the noise filter 3 to the speech recognition unit 4. The speech recognition unit 4 refers to the standard patterns stored in the built-in standard pattern memory, recognizes the voice sound (representing the command "PLAYBACK"), and outputs the recognized result to the controller 6. The controller 6 then reads a dial number "#1" which is associated with the command "PLAYBACK" from the speech recognition unit 4 from the built-in memory, and supplies the dial number to the tone signal generator 2. The tone signal generator 2 supplies a pushbutton number or a dial pulse signal corresponding to the dial number "#1" from the controller 6, through the modular jack 11 to the telephone set 10. The telephone set 10 now performs a function corresponding to the dial number "#1" from the tone signal generator 2, i.e., playbacks messages that have been recorded on the tape while the user is away.

As described above, the user can perform a function of the telephone set 10 (i.e., operate the telephone set 10) simply by uttering a command from another telephone set.

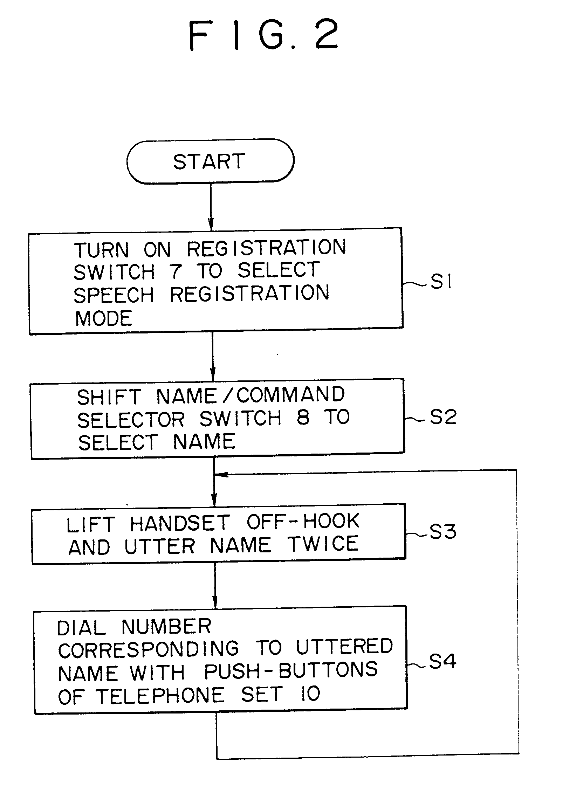

Operation of the speech recognition adapter 1 when it is in the name registration mode (for registering the name of a person to be called), the command registration mode (for registering a function of the telephone set 10), and the speech recognition mode will be described below with reference to the flowcharts of FIGS. 2, 3, and 4.

In FIG. 2, the registration switch 7 is turned on in a step S1, and then the name/command selector switch 8 is shifted to select name in a step S2. Therefore, the speech recognition adapter 1 enters the name registration mode (for registering the name of a person to be called) in the steps S1, S2.

Then, control proceeds to a step S3 in which the handset of the telephone set 10 is lifted off-hook, and the name of a person to be called is uttered twice and stored in the built-in standard pattern memory of the speech recognition unit 4. In a step S4, the telephone number of the person whose name has been uttered in the step S3 is inputted, associated with the name of the person, and stored in the built-in memory of the controller 6. The name registration mode is now completed.

If there are a plurality of persons whose names have to be registered, the above steps S3, S4 are repeated. One of the two utterances of the name of the person, which has been uttered twice in the step S3, is used for registration, and the other utterance for confirmation.

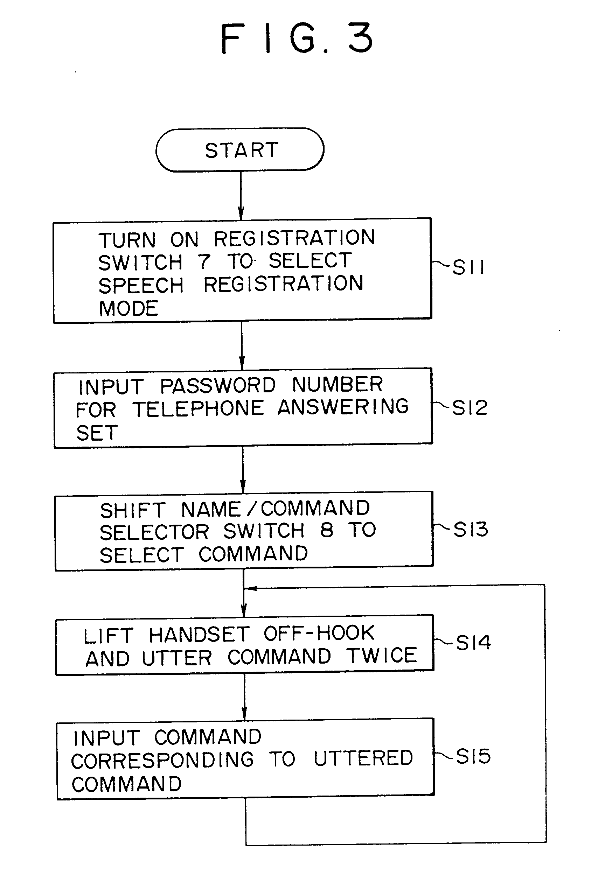

In FIG. 3, the registration switch 7 is turned on in a step S11, then a password number is inputted in a step S12, and the name/command selector switch 8 is shifted to select command in a step S13. Therefore, the speech recognition adapter 1 enters the command registration mode (for registering a function of the telephone set 10) in the steps S11, S12, S13.

Then, control proceeds to a step S14 in which the handset of the telephone set 10 is lifted off-hook, and a command is uttered twice and stored in the built-in standard pattern memory of the speech recognition unit 4. In a step S15, a dial number corresponding to the command which has been uttered in the step S14 is inputted, associated with the command, and stored in the built-in memory of the controller 6. The command registration mode is now over.

If there are a plurality of persons whose names have to be registered, the above steps S3, S4 are repeated. One of the two utterances of the name of the person, which has been uttered twice in the step S3, is used for registration, and the other utterance for confirmation.

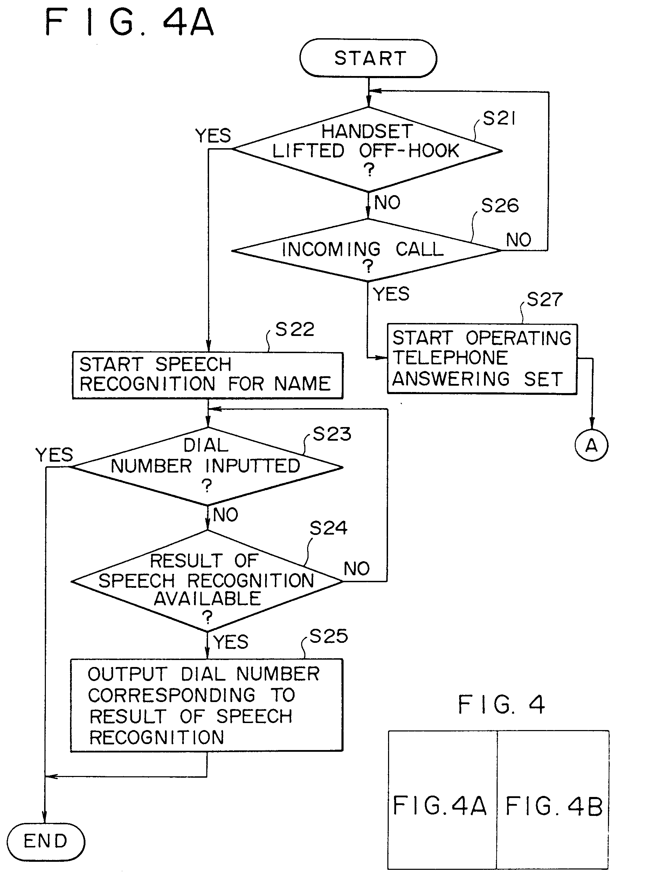

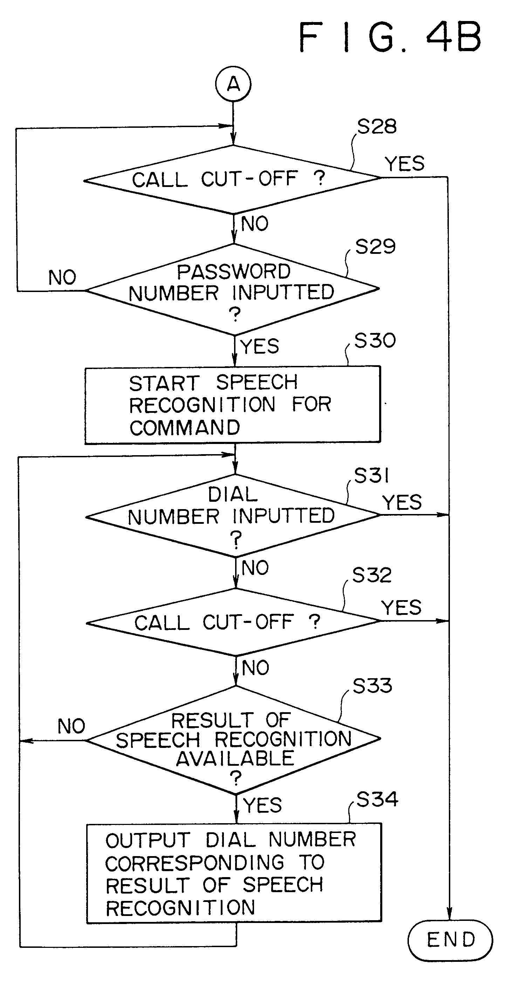

FIG. 4 shows the speech recognition mode of the speech recognition adapter 1. In FIG. 4, a step S21 determines whether the handset of the telephone set 10 is lifted off-hook or not. If the handset of the telephone set 10 is lifted off-hook, then control goes to a step S22 to start a speech recognition process for recognizing the name of a person to be called, and then goes to a step S23. The step S23 determines whether pushbuttons of the telephone set 10 are pressed to input dial numbers (representing a telephone number) or not. If dial numbers (representing a telephone number) are inputted, then the speech recognition process is brought to an end because a signal is transmitted using the pushbuttons of the telephone set 10.

If dial numbers (representing a telephone number) are not inputted in the step S23, then control proceeds to a step S24 which determines whether a recognized result is produced from the speech recognition process started in the step S22. If no recognized result is produced from the speech recognition process started in the step S22, then control goes back to the step S23. The steps S23, S24 are repeated until a recognized result is produced from the speech recognition process started in the step S22.

If a recognized result is produced from the speech recognition process started in the step S22, i.e., if the name of the person to be called is uttered and recognized in the step S24 after the handset is lifted off-hook in the step S21, control goes to a step S25 in which dial numbers (representing telephone number) associated with the name of the person recognized in the step S24 are transmitted from the telephone set 10. Thereafter, the speech recognition process is finished.

If the handset of the telephone set 10 is not lifted off-hook in the step S21, then control proceeds to a step S26 to determine whether a telephone call from another telephone set is received by the telephone set 10 or not. If not, then control returns to the step S21. The steps S21, S26 are repeated until a telephone call from another telephone set is received by the telephone set 10.

If a telephone call from another telephone set is received by the telephone set 10 in the step S26, control proceeds to a step S27 which starts the telephone answering mode of the telephone set 10. Thereafter, a step S28 determines whether the received telephone call is cut off or not. If cut off, then the speech recognition mode comes to an end. If not, then control goes to a step S29 which determines whether a password number is transmitted from the other telephone set or not. If a password number is not transmitted in the step S29, control returns to the step S28. The steps S28, S29 are repeated until a password number is transmitted from the other telephone set.

If a password number is transmitted from the other telephone set in the step S29, then control proceeds to a step S30 which starts a speech recognition process for recognizing a command. Then, control goes to a step S31 to determine whether pushbuttons of the other telephone set, from which the telephone call has been initiated, are pressed to transmit a dial number. If a dial number is transmitted from the other telephone set in the step S31, then the speech recognition mode is finished because a command is transmitted using pushbuttons of the other telephone set.

If no dial number is transmitted from the other telephone set in the step S31, then control proceeds to a step S32 which determines whether the telephone call from other telephone set is cut off or not. If cut off, then the speech recognition mode comes to an end. If not cut off, then control goes to a step S33 which determines whether a recognized result is produced from the speech recognition process started in the step S30. If no recognized result is produced from the speech recognition process started in the step S30, then control goes back to the step S31. The steps S31, S32, S33 are repeated until a recognized result is produced from the speech recognition process started in the step S30.

If a recognized result is produced from the speech recognition process started in the step S30, control goes to a step S34 in which a dial number associated with the command whose voice sound has been recognized in the step S33 is transmitted to the telephone set 10. Thereafter, the speech recognition process is finished.

After the speech recognition process is over, it is started again from the step S21 by a timer-initiated interrupt.

As described above, since the telephone set 10 can be controlled (operated) by voice sounds simply by connecting the speech recognition adapter 1 between the modular jack 11 coupled to the telephone set 10 and the modular jack 12 coupled to the exchange office, the telephone set 10 can be operated with ease at low cost.

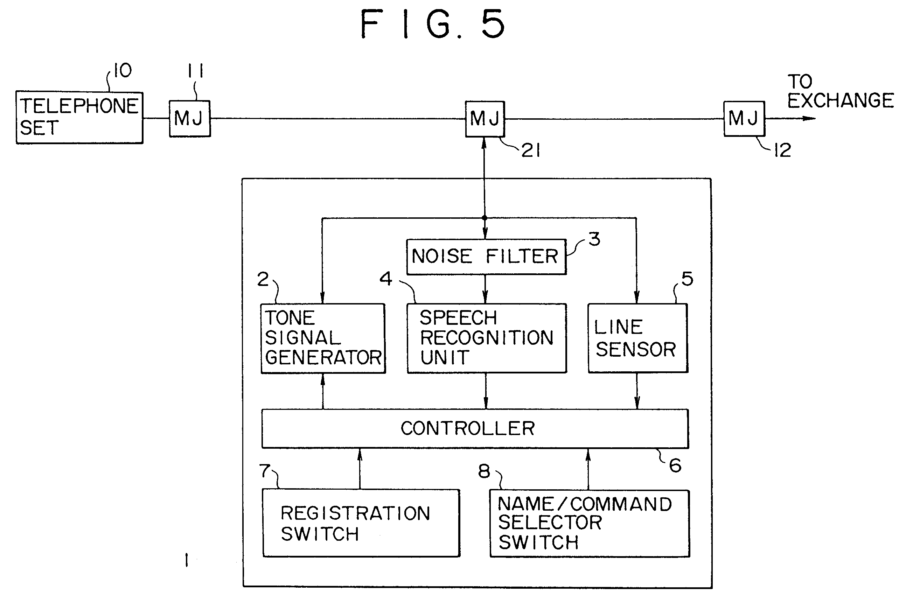

In the above embodiment, the speech recognition adapter 1 is connected in series between the modular jack 11 coupled to the telephone set 10 and the modular jack 12 coupled to the exchange office. However, as shown in FIG. 5, the modular jack 11 coupled to the telephone set 10, the modular jack 12 coupled to the exchange office, and the speech recognition adapter 1 may be connected by a three-way modular jack 21.

Although a certain preferred embodiment of the present invention has been shown and described in detail, it should be understood that various changes and modifications may be made therein without departing from the scope of the appended claims.

## Claims

1. A speech recognition adapter for use in a telephone system having a telephone set and an exchange office, adapted to be connected between a modular jack (12) coupled to the telephone set and a modular jack coupled to the exchange office, said speech recognition adapter comprising:
speech recognizing means (4) for recognizing a voice sound;
storage control means (6) for storing a voice sound recognized by said speech recognizing means (4) in association with a dial number transmitted from the telephone set (10); and
transmitting means (2) for transmitting the dial number in response to the voice sound.

2. A speech recognition adapter according to claim 1, wherein said storage control means (6) comprises a controller having a memory for storing the voice sound in association with the dial number.

3. A speech recognition adapter according to claims 1 or 2, wherein said transmitting means comprises a tone signal generator (2).

4. A speech recognition adapter according to any of claims 1 to 3, wherein said speech recognizing means (4) comprises means for recognizing a voice sound transmitted from the telephone set (10), and said transmitting means (2) comprises means, responsive to the voice sound transmitted from the telephone set (10) and recognized by said speech recognizing means (4), for transmitting a dial number associated with said voice sound and stored in said storage control means (6).

5. A speech recognition adapter according to any of claims 1 to 4, wherein said speech recognizing means (4) comprises means for recognizing a voice sound transmitted from the exchange office, and said transmitting means (2) comprises means, responsive to the voice sound transmitted from the exchange office and recognized by said speech recognizing means (4), for transmitting a dial number associated with said voice sound and stored in said storage control means (6).

6. A speech recognition adapter according to claim 2, wherein said storage control means (6) is capable of selecting a registration mode, said controller being operable to store the voice sound recognized by said speech recognizing means (4) and the dial number associated with the voice sound in said memory in said registration mode.

7. A speech recognition adapter according to claim 2, wherein said storage control means (6) is capable of selecting a speech recognition mode, said controller being operable to output the dial number stored in said memory in response to the voice sound recognized by said speech recognizing means (4) in said registration mode.

8. A speech recognition adapter according to any of claims 1 to 9, wherein said storage control means (6) is capable of selecting a name registration mode, said controller being operable to store the voice sound recognized by said speech recognizing means (4) as name information in said memory in said name registration mode.

9. A speech recognition adapter according to any of claims 1 to 8, wherein said storage control means (6) is capable of selecting a command registration mode, said controller being operable to store the voice sound recognized by said speech recognizing means (4) as command information in said memory in said command registration mode.

10. A speech recognition adapter according to any of claims 1 to 9, further comprising a noise (3) filter connected to an input terminal of said speech recognizing means (4), for removing noise from the voice sound supplied to the input terminal of said speech recognizing means(4).

11. A speech recognition adapter according to any of claims 1 to 10, wherein the telephone set has a telephone answering function.
